# EUROPÄISCHE PATENTSCHRIFT

(11) **EP 3 849 316 B1**
(45) Veröffentlichungstag und Bekanntmachung des Hinweises auf die Patenterteilung: **15.05.2024**
(21) Anmeldenummer: 19769144.7
(22) Anmeldetag: 13.09.2019
(51) Int. Cl.: A21B 3/04, F24C 15/00

(54) **GARGERÄT MIT SCHWADENKONDENSATOR**
COOKING APPLIANCE COMPRISING A VAPOUR CONDENSER
APPAREIL DE CUISSON COMPRENANT UN CONDENSATEUR DE BUÉE

(30) Priorität: 14.09.2018 DE 102018122489
(43) Veröffentlichungstag der Anmeldung: 21.07.2021
(73) Patentinhaber: MIWE Michael Wenz GmbH, 97450 Arnstein (DE)
(72) Erfinder: RUMPEL, Michael, 97450 Arnstein (DE); REH, Pascal, 97450 Arnstein (DE); RUMPEL, Wolfgang, 97450 Arnstein (DE)
(74) Vertreter: Freischem & Partner Patentanwälte mbB
(86) Internationale Anmeldenummer: PCT/EP2019/074549
(87) Internationale Veröffentlichungsnummer: WO 2020/053418

(56) Entgegenhaltungen:
- EP-A2- 1 832 818
- CA-A1- 2 965 271
- CA-A1- 2 965 271
- CN-A- 108 413 461
- CN-A- 108 413 461
- CN-U- 207 729 679
- CN-U- 207 729 679
- DE-A1-102009 052 993
- DE-A1-102009 052 993
- DE-U1- 8 815 888
- DE-U1- 8 815 888
- US-A- 2 683 795
- US-A- 2 683 795
- US-A- 5 671 726
- US-A- 5 671 726

## Beschreibung

Die Erfindung betrifft ein Gargerät mit einem Schwadenkondensator. Dabei wird unter einem Gargerät insbesondere ein Backofen verstanden, beispielsweise ein Backofen mit einer oberseitig angeordneten Dunsthaube, wobei in diesem Fall der Schwadenkondensator vorzugsweise ebenfalls oberseitig ungefähr in der gleichen horizontalen Ebene wie die Dunsthaube angeordnet ist.

Aus der Praxis der Bäckereitechnik bekannte Wärmetauscher von Schwadenkondensatoren weisen den Nachteil auf, dass es sich um geschlossene Systeme handelt, die für jeden Backofentyp geeignet ausgelegt und individuell gefertigt werden. Dadurch ergibt sich eine hohe Varianz, die relativ hohe Herstellungskosten für diese Wärmetauscher zur Folge hat. Ferner ist ein Zugang zum Inneren des Wärmetauschers bei den bekannten Schwadenkondensatoren nicht vorgesehen. Daher kann sich im Wärmetauscher anhaftender Schmutz, wie z.B. Fette, Staub etc., nicht oder nur sehr aufwendig entfernt werden. Dies kann während der Lebensdauer eines entsprechenden Gargerätes oder Backofens zu einer Verringerung des Wirkungsgrades führen.

Aus der EP 1 832 818 A2 ist eine Lüftungsanlage bekannt, welche ein Gehäuse, eine Einschubeinheit sowie einen ersten und zweiten Luftverteilungskanal aufweist. Der Luftverteilungskanal ist vorzugsweise an einer ersten Seite des Gehäuses angeordnet. Die Lüftungsanlage weist ferner mindestens einen ersten Anschluss auf, welcher jeweils an einer zweiten Seite des Gehäuses angeordnet ist. Dieser erste Anschluss dient zum Zuführen von Frischluft und zum Abführen von Fortluft. Als ein Teil von vielen ist in der Einschubeinheit auch ein Wärmetauscher angeordnet. Auf ein Gargerät oder auf die Gestaltung eines Wärmetauschers in einem solchen Gargerät wird in dem Dokument nicht Bezug genommen.

Aus CA 2 965 271 A1 ist ein Schwadenkondensator mit einem als "heat exchanger" bezeichneten, herausnehmbaren Wärmetauscher bekannt. Allerdings bezieht sich das Dokument auf ein modulares Absaugsystem für eine Küche und nicht auf ein Gargerät.

Aus DE 10 2009 052 993 A1 ist ein Küchengerät für ein Flugzeug bekannt. In Verbindung mit diesem Küchengerät ist ein Wärmetauscher offenbart, der als Modul integriert ist und für Reinigungszwecke einfach ein- und ausgebaut werden kann.

Aus US 5,671,726 A ist ein Kochdunstreiniger mit einem als "condenser" bezeichneten Kondensator bekannt, der als Ganzes aus der Vorrichtung herausziehbar angeordnet ist. In einem Ausführungsbeispiel weist der Schwadenkondensator auch noch einen zweiten Kondensator auf, zu dessen Entnehmbarkeit nichts Konkretes offenbart ist. Auf ein Gargerät wird nicht Bezug genommen.

Der Erfindung liegt die Aufgabe zugrunde, ein Gargerät mit einem Schwadenkondensator zur Verfügung zu stellen, welches gute Reinigungsmöglichkeiten bietet.

Die Lösung der Aufgabe erfolgt erfindungsgemäß mit den Merkmalen der unabhängigen Ansprüche. Weitere praktische Ausführungsformen und damit verbundene Vorteile sind in Verbindung mit den abhängigen Ansprüchen beschrieben.

Ein erfindungsgemäßes Gargerät mit Schwadenkondensator weist ein Kondensatorgehäuse auf, mindestens ein in dem Kondensatorgehäuse angeordnetes Wärmetauschermodul sowie mindestens eine Zuführöffnung, insbesondere mit einer zu einer Zuführöffnung führenden Zuführleitung, durch welche Schwaden als Prozessmedium in das Wärmetauschermodul einleitbar sind. Dabei sind ferner eine aus dem Wärmetauschermodul heraus führende Kondensatablauföffnungen, insbesondere Kondensatablaufleitungen, zur Ableitung von kondensiertem Schwaden sowie durch das Wärmetauschermodul hindurch führende Kühlleitungen vorgesehen, welche eine Durchströmung des ersten Wärmetauschermoduls mit einem Kühlmedium ermöglichen. Darüber hinaus ist mindestens ein Wärmetauschermodul in dem Kondensatorgehäuse lösbar befestigt und im Endmontagezustand des Schwadenkondensators aus dem Kondensatorgehäuse entnehmbar angeordnet.

Bei dem erfindungsgemäßen Schwadenkondensator ist das mindestens eine Wärmetauschermodul in einer in dem Kondensatorgehäuse ausgebildeten Einschuböffnung angeordnet, in welche das mindestens eine Wärmetauschermodul oder die Wärmetauschermodule schubladenartig durch einfaches translatorisches Bewegen in nur einer Richtung eingeschoben und durch Bewegen in entgegengesetzter Richtung wieder heraus gezogen werden kann bzw. können.

Mit "entnehmbar angeordnet" ist insbesondere gemeint, dass das mindestens eine Wärmetauschermodul oder die zwei oder mehr Wärmetauschermodule derart gut zugänglich innerhalb des Kondensatorgehäuses angeordnet sind, dass keine nicht lösbaren Verbindungen gelöst werden müssen, insbesondere keine Löt-, Schweiß-, Niet- oder sonstige nicht zerstörungsfrei lösbare Verbindungen. Vorzugsweise ist die lösbare Befestigung und die entnehmbare Anordnung derart gestaltet, dass durch einfaches Lösen der Befestigung des Wärmetauschermoduls in dem Kondensatorgehäuse das Wärmetauschermodul unmittelbar aus dem Kondensatorgehäuse entnehmbar ist, ohne dass weitere Elemente gelöst oder aus dem Kondensatorgehäuse entfernt werden müssen.

Besonders bevorzugt ist es, wenn der Schwadenkondensator des Gargeräts derart gestaltet ist, dass mindestens eines der Wärmetauschermodule werkzeugfrei aus dem Kondensatorgehäuse entnehmbar ist. In einer weiter bevorzugten Ausführungsform ist mindestens eines der Wärmetauschermodule zusätzlich auch werkzeugfrei in das Kondensatorgehäuse einsetzbar.

Die vorstehend und nachfolgend erläuterten Eigenschaften gelten bei einem Schwadenkondensator mit mehreren Wärmetauschermodulen vorzugsweise für alle Wärmetauschermodule oder zumindest für mehrere Wärmetauschermodule. Erfindungsgemäße Wärmetauscher haben den Vorteil, dass die konstruktive Gestaltung und Anordnung der Wärmetauschermodule innerhalb des Schwadenkondensators eine einfache Entnahme zu Reinigungs- und/oder Wartungszwecken ermöglichen. Dazu muss das entsprechende Wärmetauschermodul lediglich gelöst und aus dem Kondensatorgehäuse entnommen werden. Es kann dann als separates Element einer geeigneten Reinigung und/oder Wartung unterzogen werden. Ferner hat die werkzeugfreie Entnehmbarkeit auch Vorteile bei der erstmaligen Montage eines erfindungsgemäßen Schwadenkondensators, wenn die Montage ebenfalls werkzeugfrei möglich ist.

In einer weiteren praktischen Ausführungsform eines erfindungsgemäßen Gargeräts ist an mindestens einem Wärmetauschermodul des Schwadenkondensators mindestens ein werkzeugfrei betätigbares Fixiermittel vorgesehen. Darunter werden alle Elemente verstanden, die es ermöglichen, mit geringem Aufwand und ohne Werkzeug, wie z.B. einen Schraubendreher, ein Wärmetauschermodul aus dem Schwadenkondensator zu entnehmen. Besonders bevorzugt sind solche Fixiermittel, die mit nur einem Handgriff gelöst werden können, beispielsweise durch Drehen um maximal eine Umdrehung, Betätigen eines Verschlusselements, wobei die Betätigung insbesondere durch Drücken, Ziehen, Verschwenken und/oder Drehen erfolgen kann. Nur beispielhaft wird insoweit auf mit einer Münze betätigbare Verschlusskappen, Drehgriffe, Rastelemente und Schlossriegel verwiesen. Insbesondere wird auf konstruktive Gestaltungen verwiesen, die nach der Betätigung von einem Fixiermittel oder mehreren Fixiermitteln ein einfaches Herausziehen eines Wärmetauschermoduls aus dem Schwadenkondensator erlauben.

In einer weiteren praktischen Ausführungsform eines erfindungsgemäßen Gargeräts ist an mindestens einem der Wärmetauschermodule als Fixiermittel mindestens ein Rastelement, mindestens ein Verriegelungselement und/oder mindestens ein Klemmabschnitt vorgesehen. In Bezug auf den mindestens einen Klemmabschnitt wird insoweit noch auf Gestaltungen verwiesen, bei denen das Wärmetauschermodul im montierten Zustand (ausschließlich oder auch zusätzlich) dadurch relativ gegenüber dem Schwadenkondensator fixiert wird, dass es an einen Klemmabschnitt angepresst wird. Dies kann insbesondere über eine entsprechende Verjüngung eines Einführabschnittes bewirkt werden, wobei die Verjüngung vorzugsweise derart ausgebildet und angeordnet ist, dass eine das Wärmetauschermodul relativ gegenüber dem Schwadenkondensator fixierende Klemmwirkung erst in der zweiten Hälfte, vorzugsweise noch später, in einem letzten Bewegungsabschnitt einer Einschubbewegung erzeugt wird, beispielsweise in den letzten 1, 2, 3, 4, 5, 10 Prozent, 20 Prozent oder 30 Prozent des gesamten Bewegungsabschnittes der Einschubbewegung.

Es ist bevorzugt, wenn zwei oder mehr Wärmetauschermodule schubladenartig nebeneinander in dem Kondensatorgehäuse angeordnet sind. Besonders bevorzugt ist es, wenn mehrere baugleich gestaltete Wärmetauschermodule vorgesehen sind.

Um die Entnahme der Wärmetauschermodule zu vereinfachen, ist vorzugsweise an mindestens einem der Wärmetauschermodule mindestens ein Griff vorgesehen. Unter einem Griff werden sowohl gegenüber einer Vorderseite hervorragende Griffe, als auch ausgebildete Griffmulden und Öffnungen, zur Aufnahme von ein oder mehreren Fingern einer Bedienperson sowie sonstige konstruktive Gestaltungen verstanden, die ein Greifen und werkzeugfreies Entnehmen von Wärmetauschermodulen aus dem Schwadenkondensator erleichtern. In diesem Zusammenhang wird auch auf die Befestigung von seilartigen Griffabschnitten und knopfartigen Griffabschnitte verwiesen.

In einer weiteren praktischen Ausführungsform eines erfindungsgemäßen Gargeräts sind mehrere baugleiche Wärmetauschermodule in dem Kondensatorgehäuse angeordnet, wobei diese funktional miteinander verbunden sind. In diesem Fall kann durch eine geeignete Auslegung und/oder Auswahl eines Kondensatorgehäuses und die Anordnung mehrerer baugleicher Wärmetauschermodule eine bedarfsgerechte Auslegung der Leistung eines Schwadenkondensators erfolgen. Insbesondere können durch eine solche Gestaltung Skaleneffekte bei der Herstellung genutzt werden, indem für unterschiedliche Typen von Gargeräten stets die gleichen Wärmetauschermodule genutzt werden und die Variation der Anzahl der eingesetzten Wärmetauschermodule und/oder der geeigneten Verschaltung verschiedener Wärmetauschermodule in den entsprechenden Gargeräten die jeweils benötigte Leistung bereitgestellt wird. In dieser Art und Weise können die Herstellungskosten für Schwadenkondensatoren von Gargeräten beträchtlich reduziert werden, insbesondere wenn eine Vielzahl von Varianten und/oder Typen von Gargeräten alle Schwadenkondensatoren unter Verwendung des Wärmetauschermoduls aufweisen.

Im Zusammenhang mit dem Einsatz von mehreren baugleichen Wärmetauschermodulen kann als ein Wärmetauschermodul oder als ein Standard-Wärmetauschermodul, das mit anderen Wärmetauschermodulen kombinierbar ist, insbesondere ein in seinen Außenabmaßen relativ klein dimensioniertes Wärmetauschermodul gewählt werden. Ein solches Wärmetauschermodul hat den Vorteil, dass für den Bereich des Wärmeübergangs im Inneren, insbesondere für durch diese hindurch führende Kühlleitungen, dünnwandige Strukturen einsetzbar sind, insbesondere Bleche mit einer Wandstärke von weniger als 2 mm, bevorzugt weniger als 1,5 mm und weiter bevorzug weniger als 1,0 mm. Selbst Bleche mit Wandstärken von maximal 0,8 mm, maximal 0,6 mm oder maximal 0,5 mm sind in Verbindung mit entsprechend kleinen Außenabmaßen aufweisenden Wärmetauschermodulen einsetzbar. Dies wiederum verbessert den Wärmeübergang zwischen Prozessmedium und Kühlmedium und erhöht somit die Effizienz und die Leistungsfähigkeit eines entsprechenden Wärmetauschers und somit auch des Schwadenkondensators und/oder es ermöglicht bei gleicher Leistungsfähigkeit, das Gewicht eines Schwadenkondensators beträchtlich zu reduzieren.

Im Zusammenhang mit dem Einsatz von mehreren baugleichen Wärmetauschermodulen ist es ferner bevorzugt, wenn jedem Wärmetauschermodul mindestens ein Lüfter zugeordnet ist und/oder die Wärmetauschermodule derart miteinander verbunden sind, dass diese ausgehend von der Zuführöffnung sequenziell durchströmt werden. Die erste Variante, gemäß welcher jedem Wärmetauschermodul mindestens ein Lüfter zugeordnet ist, soll sowohl die Möglichkeit umfassen, dass ein Lüfter mehreren Wärmetauschermodulen zugeordnet ist, aber in funktionaler Verbindung mit jedem dieser Wärmetauschermodule steht, als auch die Möglichkeit, dass jedem Wärmetauschermodul mindestens ein separater Lüfter zugeordnet ist. In beiden Fällen kann durch einen entsprechend zugeordneten Lüfter ein aktiver Luftstrom erzeugt werden, insbesondere ein Luftstrom eines Kühlmediums, das durch das Wärmetauschermodul gefördert werden soll. Durch die Steuerung und/oder Regelung der Drehzahl eines entsprechenden Lüfters kann die Menge der durch das Wärmetauschermodul strömenden Luft variiert werden.

Wenn die Wärmetauschermodule derart miteinander verbunden sind, dass diese ausgehend von der Zufuhrleitung sequenziell durchströmt werden, kann durch eine solche Reihenschaltung der Wärmetauschermodule mit jedem weiteren durchströmten Wärmetauschermodul eine weitere Abkühlung des Prozessmediums bewirkt werden, so dass sich insgesamt in der Summe aller Wärmetauschermodule trotz des Einsatzes von Wärmetauschermodulen mit kleinen Außenabmaßen und dünnwandigen Strukturen eine große Gesamtkühlleistung ergibt.

In einer weiteren praktischen Ausführungsform eines Gargeräts sind zur direkten Verbindung von zwei Wärmetauschermodulen Verbindungsleitungen vorgesehen. Eine derartige direkte Verbindung ist vorzugsweise jeweils zwischen zwei benachbart angeordneten Wärmetauschermodulen vorgesehen, um die Länge der entsprechenden Verbindungsleitungen kurz zu halten. Die Verbindung erfolgt dabei vorzugsweise mithilfe von Verbindungsleitungen aus einem elastischen und sich somit an variierende Abstände anpassenden Werkstoffen hergestellten Elementen. Diesbezüglich wird insbesondere auf Dichtelemente verwiesen, welche aus Silikon, einem Kautschukwerkstoff oder einem anderen elastomeren Werkstoff hergestellt sind. Durch den Einsatz derartiger Verbindungsleitungen kann ein Lage- und Toleranzausgleich zwischen zwei benachbarten Wärmetauschermodulen erfolgen.

Es ist alternativ oder in Ergänzung zu den vorstehend beschriebenen Ausführungsformen vorteilhaft, wenn bei einem erfindungsgemäßen Gargeräts zur Steuerung einer mit mindestens einem der Lüfter erzeugten Druckdifferenz zwischen dem Umgebungsdruck und dem Druck an einer Messstelle im Strömungsweg des Prozessmediums durch den Schwadenkondensator mindestens ein Strömungsbypass vorgesehen ist, um einen einstellbaren Teilstrom des mit diesem mindestens einem Lüfter geförderten Kühlmediums außenseitig eines Wärmetauschermoduls vorbeiströmen lassen zu können. Dazu ist in einer besonders bevorzugten Ausführungsform ein Schieberelement oder ein sonstiges Stellelement vorgesehen, um den Strömungsquerschnitt des Bypasses durch Betätigung des Schieberelements oder eines sonstigen Betätigungselements variieren zu können und somit die durch den Bypass strömende Luftmenge relativ zu einer durch mindestens ein Wärmetauschermodul strömenden Luftmenge variieren zu können. So kann sich eine gewünschte Druckdifferenz an sich an dem entsprechenden Standort eines Gargerätes bzw. Schwadenkondensators schwankende Druckverhältnisse angepasst werden.

Wenn die durch mindestens eines der Wärmetauchermodule hindurch führenden Kühlleitungen gegenüber der Horizontalen derart geneigt angeordnet sind, dass die geneigte Oberfläche als die Schwerkraft nutzende Ablauffläche für Kondensat dient, ist es aufgrund dieser konstruktiven Gestaltung nicht erforderlich, weitere Mittel zur Förderung von kondensiertem Schwaden in Form von Wassertröpfen vorzusehen. Besonders bevorzugt ist es in diesem Zusammenhang, wenn ein oder mehrere Ablaufflächen in mindestens zwei Richtungen derart geneigt sind, dass sich Kondensat an einer diskreten Sammelstelle innerhalb des Wärmetauschermoduls sammelt, von welcher sich Kondensatablauföffnungen und/oder Kondensatablaufleitungen erstrecken, so dass Kondensat permanent schwerkraftbedingt aus dem Kondensatorgehäuse über die Kondensatablauföffnungen und/oder Kondensatablaufleitungen heraus gefördert wird.

In einer weiteren praktischen Ausführungsform eines erfindungsgemäßen Gargeräts ist mindestens eines der Wärmetauschermodule vorderseitig und/oder rückseitig formschlüssig und/oder kraftschlüssig in dem Kondensatorgehäuse festgelegt. Eine derartige Festlegung kann auf einfache und geeignete Art und Weise nahezu ohne zusätzliche Herstellungskosten an dem Wärmetauschermodul und/oder an dem Kondensatorgehäuse realisiert werden. Einzelheiten hierzu werden in Verbindung mit dem in den Figuren gezeigten Ausführungsbeispiel noch erläutert.

Wenn mindestens eines der Wärmetauschermodule vorderseitig und rückseitig einen vorderen Rahmen und einen hinteren Rahmen aufweist, wobei der vordere Rahmen und der hintere Rahmen fest mit einem dazwischen angeordneten Gehäusekörper verbunden sind, ist es besonders bevorzugt, wenn die Rahmen aus Kunststoff ausgebildet sind, während das Gehäuse aus einem metallischen Werkstoff ausgebildet ist. Als metallischer Werkstoff eignet sich insbesondere ein Stahlwerkstoff und/oder ein Aluminiumwerkstoff. Die vorderseitigen und rückseitigen Rahmen können in diesem Fall entweder unmittelbar an den Gehäusekörper angespritzt sein oder als Clipsrahmen oder Steckrahmen derart hergestellt sein, dass diese auf den Gehäusekörper aufsteckbar sind. An aus Kunststoff hergestellten Rahmen kann relativ einfach und kostengünstig ein Griff vorgesehen sein, insbesondere durch einstückige Ausbildung eines entsprechenden Griffs an dem Rahmen selbst. Alternativ oder in Ergänzung können die Rahmen mit dem Gehäusekörper verklebt und/oder über eine geeignete Vergussmasse und/oder eine Dichtmasse mit dem Gehäusekörper verbunden sein.

Eines oder mehrere der folgenden Merkmale können aus den nachstehend erläuterten Gründen bei der Realisierung eines erfindungsgemäßen Gargeräts mit einem solchen Schwadenkondensator ebenfalls vorteilhaft sein, wobei diese Merkmale auch beliebig miteinander kombinierbar sind, soweit sich eine Kombination der Merkmale nicht ausschließt:
a) Unterseitig mindestens eines der Wärmetauschermodule ist mindestens ein stiftartig ausgebildetes Fußelement vorgesehen, mittels welchem in Endmontagelage eine in mindestens einer Richtung formschlüssige Fixierung gegenüber dem Kondensatorgehäuse herstellbar ist.
b) Rückseitig mindestens eines der Wärmetauschermodule ist mindestens ein rohrstutzenartig hervorragendes Ende vorgesehen, das in Endmontagelage durch eine in einem rückseitigen Rahmen ausgebildete Öffnung geführt ist.
c) An mindestens einer Seite mindestens eines der Wärmetauschermodule ist eine Führungseinrichtung vorgesehen, mittels welcher ein präzises und sicheres Einführen des rohrstutzenartigen Endes in eine in dem rückseitigen Rahmen ausgebildete Öffnung ermöglicht wird.
d) In diesem Zusammenhang wird insbesondere auf eine oder mehrere in einer Richtung hervorragende Rippen oder sonstige Elemente verwiesen, die mit einer trichter- oder rampenartig ausgebildeten Führungsstruktur zusammenwirken. Dabei sind die Rippen oder sonstigen Elemente an dem Wärmetauschermodul und die Führungsstruktur an dem Kondensatorgehäuse angeordnet oder ausgebildet oder umgekehrt.
e) Als Verbindungsleitung sind ein oder mehrere Standard-Dichtelemente vorgesehen.
   Diesbezüglich wird insbesondere darauf verwiesen, dass die Dichtelemente vorzugsweise zwischen zwei benachbarten Wärmetauschermodulen positioniert und/oder mit dem mindestens einen Wärmetauschermodul verschraubt sind. Bevorzugt sind mehrere, sich jeweils radial nach außen erstreckende Wulste aufweisende Dichtelemente vorgesehen. In diesem Fall kann eine Wulst (oder mehrere Wulste) zur Fixierung gegenüber dem Wärmetauschermodul verwendet werden. Ferner sind derartige Dichtelemente mit Wulsten als Standard-Elemente kostengünstig verfügbar. Alternativ können auch andere Elemente als Dichtelemente eingesetzt werden, insbesondere geeignete Dichtwerkstoffe, die mit Wärmetauschermodulen verklebt oder anderweitig verbunden werden.
   Alternativ oder in Ergänzung dazu ist es vorteilhaft, wenn ein oder mehrere Dichtelemente - unabhängig von deren konstruktiver Gestaltung - fest mit dem Wärmetauschermodul verbunden und derart an diesem angeordnet sind, dass das entsprechende Wärmetauschermodul mit der daran angeordneten Dichtung für Wartungs- und Austauschzwecke aus dem Schwadenkondensator entnehmbar und wieder einbringbar ist.
f) Zusätzlich zu den Kondensatablauföffnungen ist in dem Kondensatorgehäuse mindestens eine Wannenablaufleitung vorgesehen.
   In diesem Fall müssen Verbindungsleitungen die Verbindung zwischen zwei Wärmetauschermodulen und/oder zwischen einem anderen Elemente und einen Wärmetauschermodul oder zwischen sonstigen Elementen in dem Strömungspfad des Schwadens nicht zu 100 Prozent abdichten, weil außerhalb dieses Strömungspfades entstehendes oder dorthin gelangendes Kondensat über die Wannenablaufleitung aus dem Kondensatorgehäuse heraus gefördert wird.
g) Als Strömungsbypass ist als Fluidleitung ein sich seitlich eines Wärmetauschermoduls erstreckender Strömungskasten vorgesehen, welcher eine fluidale Verbindung zu einem stromaufwärts vor einem Lüfter angeordneten Abströmbereich des Wärmetauschermoduls aufweist.
   Die fluidale Verbindung von der Fluidleitung zu dem Abströmbereich des Wärmetauschermoduls kann insbesondere durch eine in dem Wärmetauschermodul ausgebildete Ausnehmung realisiert sein, beispielsweise indem ein Sollausbruch vorgesehen ist.
h) Mehrere baugleiche Wärmetauschermodule sind schubladenartig nebeneinander in dem Kondensatorgehäuse angeordnet.
   In diesem Fall ergibt sich eine besondere einfache Montage und Demontage, weil die Wärmetauschermodule im Wesentlich nur translatorisch eingeschoben bzw. herausgezogen werden müssen.
i) Mindestens eines der Wärmetauschermodule oder die Wärmetauschermodule sind derart ausgebildet, dass diese jeweils u-förmig durchströmt werden.
   Durch eine derartige Strömungsführung kann die umströmte Oberfläche der Kühlleitungen und somit die Effizienz der Kühlung bzw. Kondensation maximiert werden.
j) Der Schwadenkondensator ist hinter einer abnehmbar an dem Gargerät montierten Dunsthaube angeordnet.
   In diesem Zusammenhang wird insbesondere auf Dunsthauben verwiesen, die im oberen Bereich von Gargeräten angeordnet sind. Diese können beispielsweise unmittelbar vor einem Schwadenkondensator montiert sein, insbesondere an ein Kondensatorgehäuse angrenzend.
k) Der Schwadenkondensator weist mindestens einen Lüfter auf, der als Antriebsmittel für das Kühlmedium und für das Prozessmedium dient.
   In diesem Fall ergibt sich eine besonders effiziente Ausnutzung der Leistung des Lüfters. Insbesondere kann auf einen separaten Lüfter verzichtet werden.
l) Ein Lüfter, welcher in Strömungsrichtung des Prozessmediums durch den Schwadenkondensator betrachtet in funktionaler Verbindung mit dem letzten Wärmetauschermodul steht, dient als Antriebsmittel für das Kühlmedium und für das Prozessmedium.
m) In dem Schwadenkondensator ist ein separater Prozessmediums-Lüfter vorgesehen, welcher ausschließlich als Antriebsmittel für das Prozessmedium dient.
   In diesem Fall kann durch einfache Steuerung bzw. Regelung der Lüfterdrehzahl ausschließlich Einfluss auf die Strömungsgeschwindigkeit bzw. den Druck im Prozessmedium genommen werden.
n) Die Kühlleitungen sind zumindest teilweise aus einem Werkstoff mit einer Materialdicke von weniger als 2 mm und/oder mit einem Wärmeleitwert von größer als 10 W/(mK) herstellt.
   In diesem Fall ergibt sich ein besonders guter Wärmeübergang zwischen Kühlmedium und Prozessmedium. Darüber hinaus ist eine gewichtssparende Bauweise realisierbar.

Weitere praktische Ausführungsformen und Vorteile der Erfindung sind nachfolgend im Zusammenhang mit den Zeichnungen beschrieben. Es zeigen:
- Fig. 1: ein Ausführungsbeispiel eines Schwadenkondensators mit den Seitenwänden eines Kondensatorgehäuses und drei Wärmetauschermodulen und einer davor montierten Dunsthaube in einer perspektivischen Ansicht von schräg vorne und von oben,
- Fig. 2: den Schwadenkondensator aus Fig. 1 ohne die Dunsthaube in einer Ansicht von vorne,
- Fig. 3: den Schwadenkondensator aus Fig. 1 mit Dunsthaube in einer Ansicht von oben,
- Fig. 4: den Schwadenkondensator aus Fig. 1 in einer Ansicht von hinten,
- Fig. 5: den Schwadenkondensator aus Fig. 1 ohne Dunsthaube in einer perspektivischen Ansicht von schräg oben und von hinten,
- Fig. 6: eines des Wärmetauschermodule des Schwadenkondensators gemäß den Figuren 1-5 in einer Ansicht von schräg vorne und von oben,
- Fig. 7: das Wärmetauschermodul aus Fig. 6 mit einer daran montierten Verbindungsleitung in der gleichen Ansicht wie in Fig. 6,
- Fig. 8: eine vergrößerte Ansicht des in Fig. 7 mit VIII gekennzeichneten Bereiches,
- Fig. 9: eine vergrößerte Ansicht des in Fig. 8 mit IX gekennzeichneten Bereiches in einer Schnittdarstellung durch die Mittelachse eines bodenseitigen Zapfens zur Herstellung einer formschlüssigen Festlegung des Wärmetauschmoduls in dem Boden des Kondensatorgehäuses,
- Fig. 10: den hinteren Teil eines Wärmetauschermoduls sowie einen Teil einer Lüfterwand in Form eines Lüfterblechs des Kondensatorgehäuses des Schwadenkondensators aus den Figuren 1-5 während der Montage des Wärmetauschermoduls in einer perspektivischen Ansicht von schräg oben und von vorne,
- Fig. 11: das Wärmetauschermodul aus Fig. 6 in einer perspektivischen Ansicht von der Seite und von unten,
- Fig. 12: eine vergrößerte Ansicht des Kondensatorgehäuses des Schwadenkondensators aus den Figuren 1-5 im Bereich des hinteren Rahmens in einer perspektivischen Ansicht von schräg unten,
- Fig. 13: eine vergrößerte Darstellung des in Fig. 2 mit XIII gekennzeichneten Bereichs in einer perspektivischen Ansicht von schräg oben,
- Fig. 14: eine vergrößerte Darstellung des in Fig. 3 mit XIV gekennzeichneten Bereichs in einer perspektivischen Ansicht von schräg oben sowie
- Fig. 15: eine vergrößerte Darstellung des in Fig. 3 mit XV gekennzeichneten Bereichs in einer perspektivischen Ansicht von schräg oben.

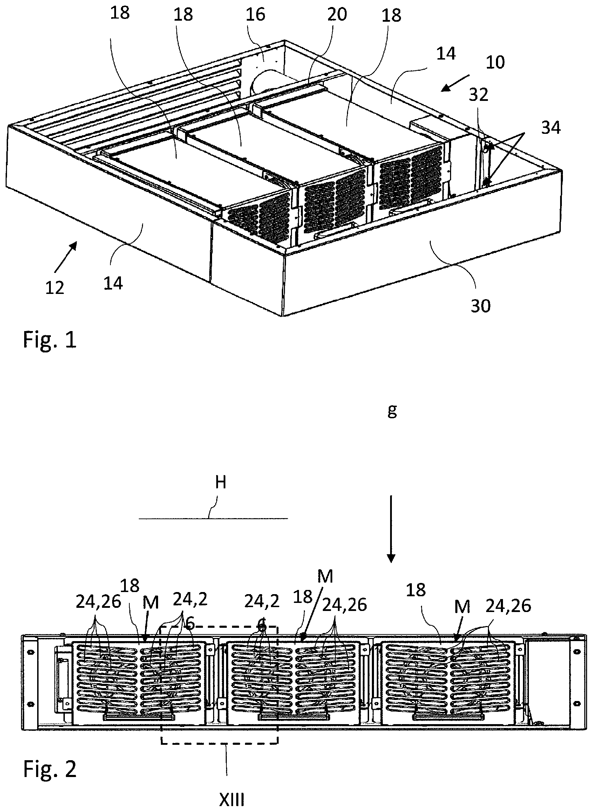

Die Figuren 1 bis 5 zeigen ein die Erfindung nicht beschränkendes Ausführungsbeispiel eines Schwadenkondensators 10. Dieser Schwadenkondensator 10 ist zur Anordnung in einem in den Figuren nicht dargestellten Backofen vorgesehen. Der Schwadenkondensator 10 umfasst ein Kondensatorgehäuse 12, von welchem in Figur 1 nur Seitenwände 14 und eine Rückwand 16 dargestellt sind. Um den konstruktiven inneren Aufbau des Schwadenkondensators 10 zu erkennen, sind eine oder mehrere den Schwadenkondensator 10 von der Oberseite her vollständig oder teilweise verschließende Deckwände in den Figuren (insbesondere in den Figuren 1, 3 und 5) nicht dargestellt.

Wie in Figur 1 gut erkennbar ist, sind in dem Schwadenkondensator 10 drei Wärmetauschermodule 18 angeordnet. Bei den in dem Ausführungsbeispiel gezeigten Wärmetauschermodulen 18 handelt es sich um baugleiche, identische Elemente, die nebeneinander angeordnet sind.

In Bezug auf die oberseitige Abdeckung (Deckwände) werden vorzugsweise ein sich von der Rückseite her erstreckendes Abdeckblech (nicht dargestellt) und ein sich von der Vorderseite aus erstreckender Deckel (nicht dargestellt) als Deckwände eingesetzt, die sich jeweils über die gesamte Breite erstrecken, aber in Längsrichtung einen mittleren Zwischenraum oberhalb der Wärmetauschermodule 18 frei zugänglich lassen.

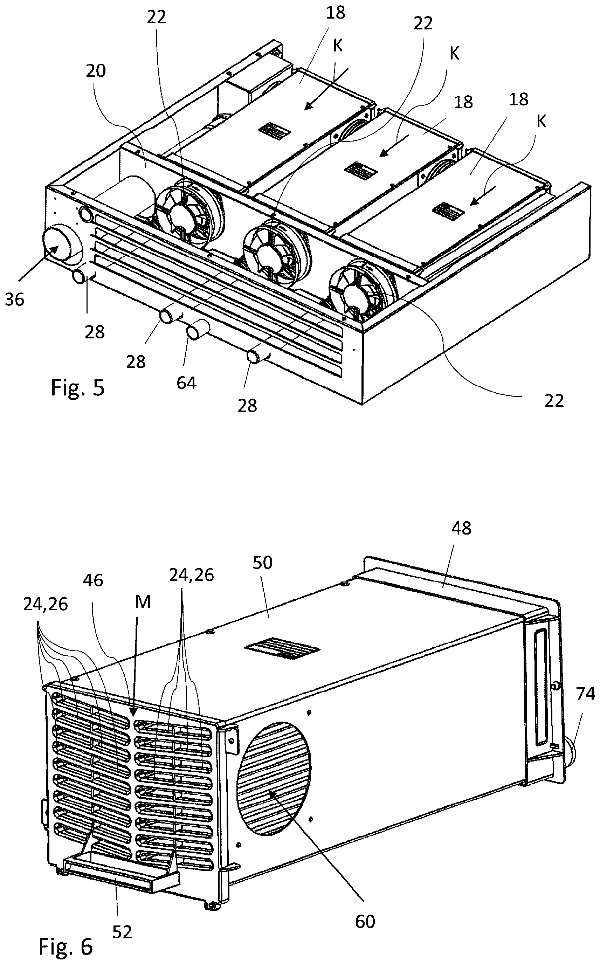

Rückseitig grenzen die Wärmetauschermodule an eine sich quer durch das Kondensatorgehäuse 12 erstreckende Lüfterwand 20, die hier als Lüfterblech ausgebildet ist. Wie in Figur 5 gut zu erkennen ist, sind in der Lüfterwand 20 drei Lüfter 22 vorgesehen, wobei jeder Lüfter 22 einem Wärmetauschermodul 18 zugeordnet ist. Bei den in Figur 5 gezeigten Lüftern 22 handelt es sich um sogenannte Axiallüfter, welche in dem gezeigten Ausführungsbeispiel luftsaugend in Längsrichtung durch die Wärmetauschermodule 18 hindurch fördern können. Da die Luft in dem gezeigten Ausführungsbeispiel als Kühlmedium dient, welche durch flache, sich überwiegend in Querrichtung erstreckende Rohe 24 gefördert wird, ist die Förderrichtung der Luft durch die Wärmetauschermodule hindurch in Figur 5 mit entsprechenden Pfeilen K gekennzeichnet.

Wie in Figur 2 gut zu erkennen ist, sind in jedem Wärmetauschermodul insgesamt 18 Rohre 24 in jedem Wärmetauschermodul 18 vorgesehen, wobei jeweils neun Rohre 24 übereinander in zwei Reihen nebeneinander angeordnet sind. Die Rohre 24 dienen als Kühlleitungen 26. In der gezeigten Ausführungsform sind die Rohre 24 aus dünnem Blech mit einer Wandstärke von 0,5 mm gefertigt, hier aus Aluminiumblech. Aufgrund dieser sehr geringen Wandstärke und aufgrund des Werkstoffs mit einer hohen Wärmeleitfähigkeit ergibt sich ein sehr guter Wärmeübergang zwischen dem Kühlmedium (Luft) und dem Prozessmedium (Schwaden). Für die Rohre 24 bevorzugt sind Werkstoffe mit einem Wärmeleitwert von größer als 10 W/(mK), bevorzugt größer als 100 W/(mK) und besonders bevorzugt größer als 200 W/(mK).

Wie in Figur 2 gut zu erkennen ist, sind die Kühlleitungen 26 gegenüber der Horizontalen H (als Horizontale wird die Ebene senkrecht zur Gravitationskraft g angesehen) derart geneigt, dass sich eine insgesamt V-förmige Anordnung innerhalb der Wärmetauschermodule 18 ergibt. Sich im Bereich der Rohre 24 bildendes Kondensat, das sich auf der Oberseite eines Rohres 24 bildet oder dort landet, wird daher von der Oberfläche in Richtung der jeweiligen Mitte M des Wärmetauschermoduls 18 gefördert und dann aufgrund der Gravitationskraft g in Richtung Boden des Wärmetauschermoduls 18 gefördert. Der nicht im Detail dargestellte Boden der Wärmetauschermodule 18 ist ferner derart geneigt, dass Kondensat, welches auf den Boden eines Wärmetauschers 18 gelangt, in Richtung rückseitig der Wärmetauschermodule 18 angeordneter Kondensatablaufleitungen 28 gefördert wird.

In der perspektivischen Darstellung der Figur 1 ist vor dem Kondensatorgehäuse 12 eine in einer Ansicht von oben U-förmig gestaltete Dunsthaube 30 angeordnet, die insbesondere zu Wartungszwecken leicht demontierbar ist. Dazu sind in der gezeigten Ausführungsform insgesamt vier Schlüssellochöffnungen 32 vorgesehen, wobei in Figur 1 nur die Schlüssellochöffnungen 32 auf der rechten Seite erkennbar sind. Zur Demontage der Dunsthaube 30 müssen lediglich Befestigungsschrauben 34 etwas gelöst werden. Die Dunsthaube 30 kann dann soweit nach oben verschoben werden, dass sich die Dunsthaube nach vorne abnehmen lässt, in dem die Schraubenköpfe durch die großen Öffnungsbereiche der Schlüssellochöffnungen 32 hindurch geführt werden.

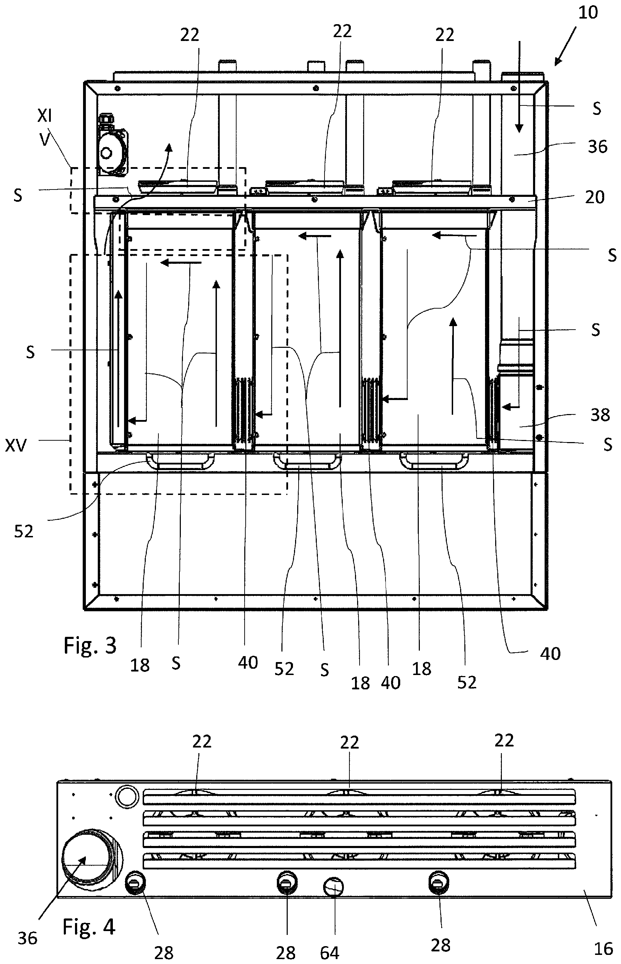

In Figur 3, welche den Schwadenkondensator 10 in einer Ansicht von oben zeigt, ist mithilfe der Pfeile S der Strömungsverlauf von Schwaden gezeigt, welcher mithilfe des Schwadenkondensators 10 gekühlt und kondensiert werden soll. Über eine zu einer Zuführöffnung (nicht dargestellt) führende Zuführleitung 36, welche sich von der Rückseite des Schwadenkondensators 10 bis zu einem Sammelkasten 38 erstreckt, wird Schwaden über eine erste Verbindungsleitung 40 in das rechte und Wärmetauschermodul 18 eingeleitet, welches in dieser Ausführungsform das erste von Schwaden durchströmte Wärmetauschermodul 18 ist. In dem Wärmetauschermodul 18 sind nicht dargestellte, innere Strukturen vorgesehen, mittels welchen der Schwaden in der gezeigten Ausführungsform im Bereich der rechten Seite des ersten Wärmetauschermoduls 18 in Längsrichtung nach hinten, dann in Querrichtung nach links und dann im Bereich der linken Seite wieder in Längsrichtung nach vorne geführt wird. Durch eine nur in Figur 6 erkennbare Öffnung 60 strömt Schwaden dann durch eine weitere Verbindungsleitung 40 in das mittlere Wärmetauschermodul 18. Analog zu der vorstehend bereits beschriebenen Strömungsführung in dem ersten Wärmetauschermodul wird der Schwaden durch das mittlere Wärmetauschermodul 18, von dem mittleren Wärmetauschermodul 18 über eine weiteren Verbindungleitung 40 in das linke Wärmetauschermodul 18 und dann durch das linke Wärmetauschermodul 18 gefördert.

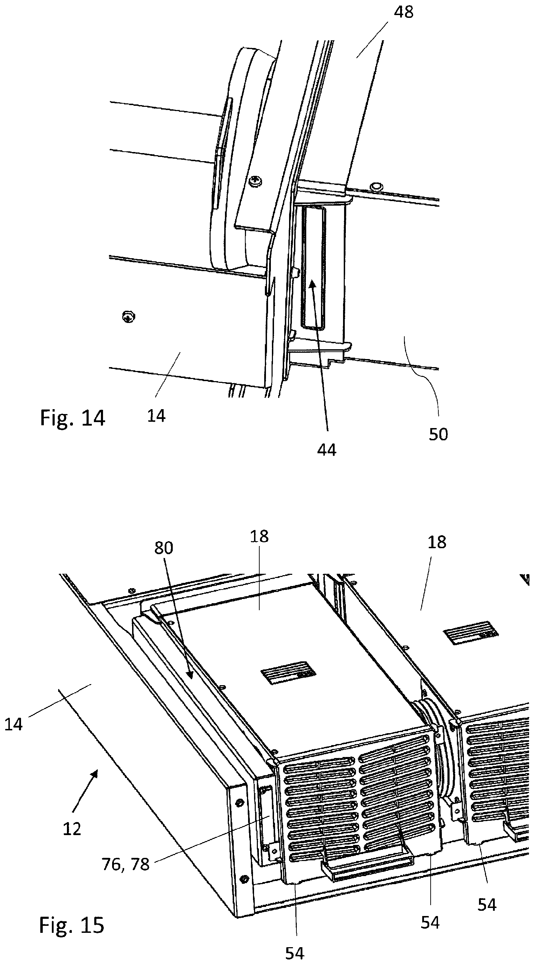

Aus dem linken und in dieser Ausführungsform letzten, von Schwaden durchströmten Wärmetauschermodul 18 wird Restschwaden bzw. die weitestgehend oder vollständig entfeuchtete Luft durch eine separate Schwadenleitung in Längsrichtung parallel zu den Längsseiten der Wärmetauschermodule 18 zu einer nur in Figur 14 erkennbaren Öffnung 44 geführt. Durch diese Öffnung 44 wird der Restschwaden mithilfe des dem linken Wärmetauschermodul 18 zugeordneten Lüfter 22 in Längsrichtung nach hinten aus dem Kondensatorgehäuse 12 hinausgefördert.

In den Figuren 6, 7 und 11 ist der konstruktive Aufbau der Wärmetauschermodule 18 am Beispiel nur eines isoliert dargestellten Wärmetauschermoduls 18 gut erkennbar. Das Wärmetauschermodul 18 umfasst einen vorderen Rahmen 46, einen hinteren Rahmen 48 und einen dazwischen angeordneten Gehäusekörper 50. Der Gehäusekörper 50 ist aus einem metallischen Werkstoff hergestellt, hier aus Stahlblech. Der vordere Rahmen 46 und der hintere Rahmen 48 sind in der gezeigten Ausführungsform jeweils aus Kunststoff hergestellt.

Wie in Figur 6 gut erkennbar, ist an dem vorderen Rahmen 46 ein Griff 52 vorgesehen. Dieser Griff 52 ist in der gezeigten Ausführungsform einstückig an dem vorderen Rahmen 46 ausgebildet.

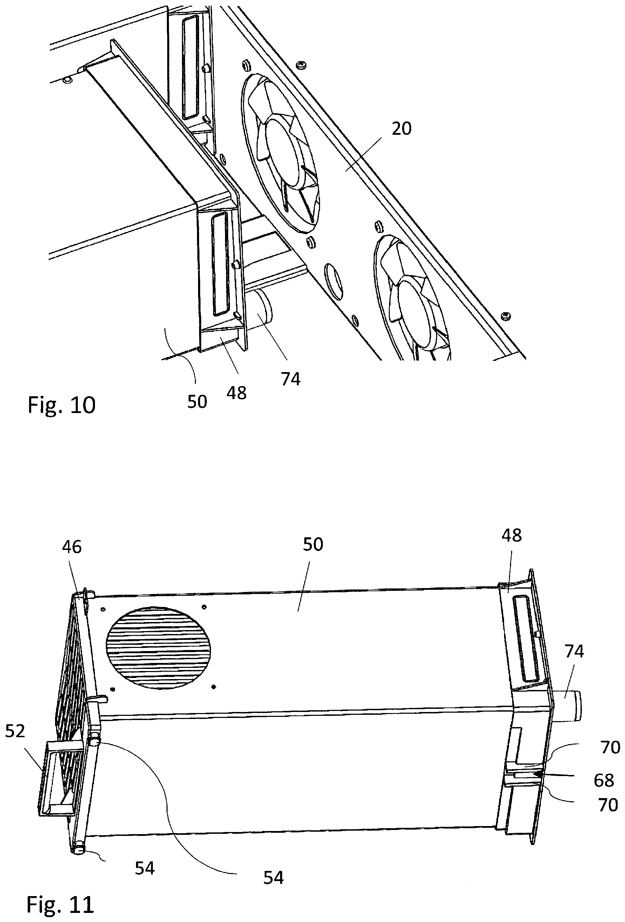

Wie in Figur 11 gut erkennbar ist, sind an dem vorderen Rahmen 46 ferner unterseitig zwei zylindrische Zapfen 54 ausgebildet. Mithilfe dieser Zapfen 54 kann das Wärmetauschermodul 18 in komplementär ausgebildeten Öffnungen 56 im Boden 58 des Kondensatorgehäuses 12 formschlüssig festgelegt werden.

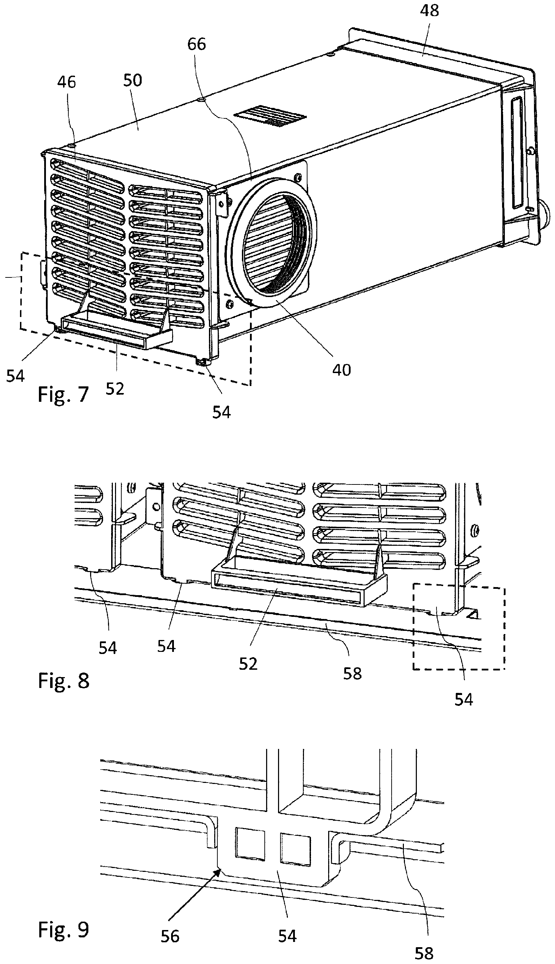

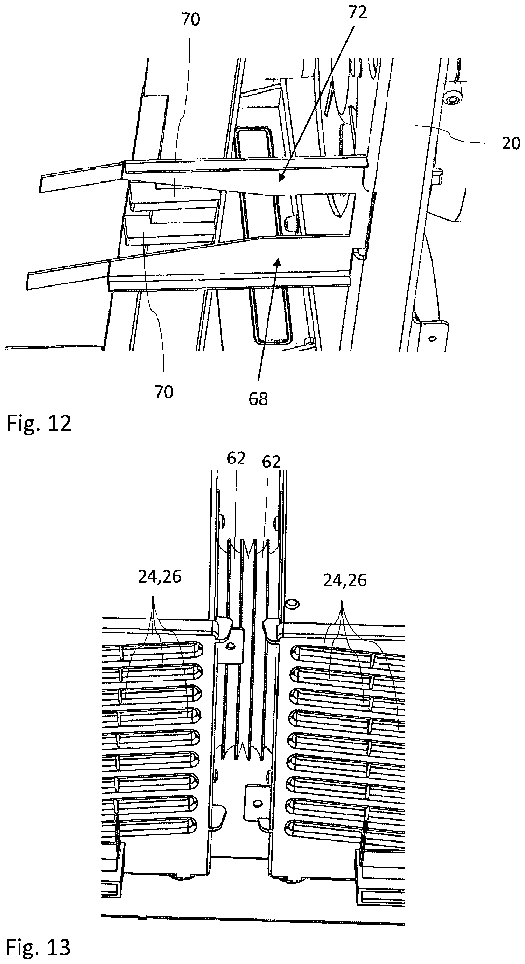

In Figur 6 ist ferner zu erkennen, dass in dem Gehäusekörper 50 seitlich eine Öffnung 60 vorgesehen ist. Diese Öffnung 60 dient zum Anschluss einer Verbindungsleitung 40, wie in Figur 7 gut erkennbar ist. In Figur 7 ist in Verbindung mit Figur 13 gut erkennbar, dass als Verbindungsleitung 40 zwischen zwei benachbarten Wärmetauschermodulen 18 jeweils zwei Dichtelemente 62 vorgesehen sind. Die Dichtelemente 62 sind auf Stoß derart angeordnet, dass diese eine weitestgehend dichtende Verbindung herstellen. Eine hundertprozentige Dichtheit ist an dieser Stelle nicht erforderlich, weil bodenseitig des Kondensatorgehäuses 12 ein sogenannter Wannenablauf vorgesehen ist. Damit ist gemeint, dass Kondensat, welches außerhalb der Wärmetauschermodule 18 in den Bereich des Bodens des Kondensatorgehäuses 12 gelangt, über eine separate Wannenablaufleitung 64 nach hinten aus dem Kondensatorgehäuse 12 heraus geführt wird.

Wie in Figur 7 erkennbar ist, ist in der gezeigten Ausführungsform zur Befestigung eines Dichtelements 62 eine rechteckige Platte 66 vorgesehen, die mit dem Gehäusekörper 50 fest verbunden ist, insbesondere durch Verschrauben.

Wie in Figur 12 gut erkennbar ist, ist im Bereich der Unterseite der gezeigten Wärmetauschermodule 18 eine Führungseinrichtung 68 vorgesehen. Die Führungseinrichtung 68 ist in der gezeigten Ausführungsform durch zwei sich in Längsrichtung erstreckende, nach unten hervorstehende Rippen 70 gebildet. Diese Rippen 70 wirken während der Montage beim Einschieben eines Wärmetauschermoduls in eine dafür in dem Kondensatorgehäuse vorgesehene Öffnung mit einer trichterartig ausgebildeten Führungsstruktur 72 zusammen. Diese trichterartige Führungsstruktur 72 ist seitens des Kondensatorgehäuses 12 im Bereich der Lüfterwand 20 vorgesehen. Die Führungseinrichtung 68 führt in Verbindung mit der trichterartigen Führungsstruktur 72 zu einer präzisen relativen Ausrichtung des Wärmetauschermoduls in Querrichtung und in Hochrichtung des Kondensatorgehäuses 12 derart, dass ein rückseitig an dem Wärmetauschermodul 18 hervorragendes rohrstutzenartiges Ende 74 präzise in eine dazu komplementär ausgebildete Öffnung im Bereich der Lüfterwand 20 eingeführt wird.

In Fig. 15 ist ein als Stellelement 76 dienender Schieber 78 erkennbar, der in Querrichtung verfahrbar ist, um den Querschnitt einer freigegebenen Öffnung zu variieren und so bei zumindest teilweise geöffnetem Schieber das Durchströmen von Umgebungsluft (Falschluft) mittels des dem linken Wärmetauschermoduls 18 zugeordneten Lüfters 22 zu bewirken. So kann durch eine geeignete Steuerung oder Regelung Einfluss auf die Druckverhältnisse beim Entschwaden eines Gargerätes genommen werden.

### Bezugszeichenliste

- 10: Schwadenkondensator
- 12: Kondensatorgehäuse
- 14: Seitenwand
- 16: Rückwand
- 18: Wärmetauschermodul
- 20: Lüfterwand
- 22: Lüfter
- 24: Rohr
- 26: Kühlleitung
- 28: Kondensatablaufleitung
- 30: Dunsthaube
- 32: Schlüssellochöffnung
- 34: Befestigungsschrauben
- 36: Zuführleitung
- 38: Sammelkasten
- 40: Verbindungsleitung
- 42: Strömungsführung
- 44: Öffnung
- 46: vorderer Rahmen
- 48: hinterer Rahmen
- 50: Gehäusekörper
- 52: Griff
- 54: zylindrischer Zapfen
- 56: Öffnung
- 58: Boden
- 60: Öffnung
- 62: Dichtelement
- 64: Wannenablaufleitung
- 66: Platte
- 68: Führungseinrichtung
- 70: Rippe
- 72: Führungsstruktur
- 74: rohrstutzenartiges Ende
- 76: Stellelement
- 78: Schieber
- 80: Strömungskasten

- H: Horizontale
- K: Pfeile
- M: Mitte

- g: Gravitationskraft

## Patentansprüche

1. Gargerät mit einem Schwadenkondensator und einem Kondensatorgehäuse (12), mindestens einem in dem Kondensatorgehäuse (12) angeordneten Wärmetauschermodul (18) sowie mindestens einer Zuführöffnung, durch welche Schwaden als Prozessmedium in das Wärmetauschermodul (18) einleitbar ist, wobei ferner eine aus dem Wärmetauschermodul (18) heraus führende Kondensatablauföffnung zur Ableitung von kondensiertem Schwaden vorgesehen ist, wobei mindestens ein Wärmetauschermodul (18) in dem Kondensatorgehäuse (12) lösbar befestigt und im Endmontagezustand des Schwadenkondensators (10) aus dem Kondensatorgehäuse (12) entnehmbar angeordnet ist, **dadurch gekennzeichnet, dass**
das mindestens eine Wärmetauschermodul (18) in einer in dem Kondensatorgehäuse ausgebildeten Einschuböffnung angeordnet ist, in welche das Wärmetauschermodul (18) schubladenartig durch einfaches translatorisches Bewegen in nur einer Richtung eingeschoben und durch Bewegen in entgegengesetzter Richtung wieder heraus gezogen werden kann, und
wobei durch das Wärmetauschermodul (18) hindurch führende Kühlleitungen 826) vorgesehen sind, welche eine Durchströmung des ersten Wärmetauschermoduls (18) mit einem Kühlmedium ermöglichen.

2. Gargerät nach dem vorstehenden Anspruch, **dadurch gekennzeichnet, dass** der Schwadenkondensator derart gestaltet ist, dass mindestens eines der Wärmetauschermodule (18) werkzeugfrei aus dem Kondensatorgehäuse (12) entnehmbar ist.

3. Gargerät nach einem der vorstehenden Ansprüche, **dadurch gekennzeichnet, dass** an mindestens einem der Wärmetauschermodule (18) mindestens ein werkzeugfrei betätigbares Fixiermittel vorgesehen ist.

4. Gargerät nach dem vorstehenden Anspruch, **dadurch gekennzeichnet, dass** an mindestens einem der Wärmetauschermodule (18) als Fixiermittel mindestens ein Rastelement, mindestens ein Verriegelungselement und/oder mindestens ein Klemmabschnitt vorgesehen ist.

5. Gargerät nach einem der vorstehenden Ansprüche, **dadurch gekennzeichnet, dass** die Wärmetauschermodule (18) schubladenartig nebeneinander in dem Kondensatorgehäuse (12) angeordnet sind.

6. Gargerät nach einem der vorstehenden Ansprüche, **dadurch gekennzeichnet, dass** an mindestens einem der Wärmetauschermodule (18) ein Griff vorgesehen ist.

7. Gargerät nach einem der vorstehenden Ansprüche, **dadurch gekennzeichnet, dass** mehrere baugleiche Wärmetauschermodule (18) in dem Kondensatorgehäuse (12) angeordnet und diese funktional miteinander verbunden sind.

8. Gargerät nach dem vorstehenden Anspruch, **dadurch gekennzeichnet, dass** jedem Wärmetauschermodul (18) mindestens ein Lüfter (22) zugeordnet ist und/oder die Wärmetauschermodule (18) derart miteinander verbunden sind, dass diese ausgehend von der Zuführöffnung aus sequenziell durchströmt werden.

9. Gargerät nach einem der beiden vorstehenden Ansprüche, **dadurch gekennzeichnet, dass** zur direkten Verbindung von zwei Wärmetauschermodulen (18) Verbindungsleitungen (40) vorgesehen sind.

10. Gargerät nach einem der beiden vorstehenden Ansprüche, **dadurch gekennzeichnet, dass** zur Steuerung einer mit mindestens einem der Lüfter (22) erzeugten Druckdifferenz zwischen dem Umgebungsdruck und dem Druck an einer Messstelle im Strömungsweg des Prozessmediums durch den Schwadenkondensator mindestens ein Strömungsbypass vorgesehen ist, um einen einstellbaren Teilstrom des mit diesem mindestens einen Lüfter (22) geförderten Kühlmediums außenseitig eines Wärmetauschermoduls (18) vorbeiströmen lassen zu können.

11. Gargerät nach dem vorstehenden Anspruch, **dadurch gekennzeichnet, dass** die durch mindestens eines der Wärmetauschermodule (18) hindurch führenden Kühlleitungen (26) gegenüber der Horizontalen (H) derart geneigt angeordnet sind, dass die geneigte Oberfläche als die Schwerkraft nutzende Ablauffläche für Kondensat dient.

12. Gargerät nach einem der vorstehenden Ansprüche, **dadurch gekennzeichnet, dass** mindestens eines der Wärmetauschermodule (18) vorderseitig und/oder rückseitig formschlüssig und/oder kraftschlüssig in dem Kondensatorgehäuse (12) festgelegt ist.

13. Gargerät nach einem der vorstehenden Ansprüche, **dadurch gekennzeichnet, dass** mindestens eines der Wärmetauschermodule (18) vorderseitig und rückseitig einen vorderen Rahmen (46) und einen hinteren Rahmen (48) aufweist, wobei der vordere Rahmen (46) und der hintere Rahmen (48) fest mit einem dazwischen angeordneten Gehäusekörper (50) verbunden sind.

## Claims

1. Cooking appliance having a vapour condenser and a condenser housing (12), at least one heat exchanger module (18) disposed in the condenser housing (12) and at least one feed opening through which vapour can be fed into the heat exchanger module (18) as a process medium, wherein further a condensation drain opening leading out of the heat exchanger module (18) is provided for discharging condensed vapour,
wherein at least one heat exchanger module (18) is releasably fixed in the condenser housing (12) and is disposed in a manner removable from the condenser housing (12) in the final assembled state of the vapour condenser (10),
**characterized in that**
the at least one heat exchanger module (18) is disposed in an insertion opening formed in the condenser housing, into which insertion opening the heat exchanger module (18) can be inserted in the manner of a drawer by a simple translational movement in only one direction and through which it can be drawn back out by a movement in the opposite direction, and
wherein cooling lines (26) passing through the heat exchanger module (18) are provided which enable the first heat exchanger module (18) being flowed through by a coolant.

2. Cooking appliance according to the preceding claim, **characterized in that** the vapour condenser is configured such that at least one of the heat exchanger modules (18) can be removed from the condenser housing (12) without the use of tools.

3. Cooking appliance according to one of the preceding claims, **characterized in that** on at least one of the heat exchanger modules (18) at least one fixing means operable without the use of tools is provided.

4. Cooking appliance according to the preceding claim, **characterized in that** on at least one of the heat exchanger modules (18) at least one snap-in element, at least one locking element and/or at least one clamping portion is provided as a fixing means.

5. Cooking appliance according to one of the preceding claims, **characterized in that** the heat exchanger modules (18) are disposed adjacent to each other in the manner of drawers in the condenser housing (12).

6. Cooking appliance according to one of the preceding claims, **characterized in that** on at least one of the heat exchanger modules (18) a handle is provided.

7. Cooking appliance according to one of the preceding claims, **characterized in that** several heat exchanger modules (18) of identical construction are disposed in the condenser housing (12) and that these are functionally connected with each other.

8. Cooking appliance according to the preceding claim, **characterized in that** at least one fan (22) is associated with each heat exchanger module (18) and/or the heat exchanger modules (18) are connected with each other such that starting from the feed opening they are flowed through sequentially.

9. Cooking appliance according to one of the two preceding claims, **characterized in that** connecting lines (40) are provided for the direct connection between two heat exchanger modules (18).

10. Cooking appliance according to one of the two preceding claims, **characterized in that** for controlling a pressure difference generated by at least one of the fans (22) between the ambient pressure and the pressure at a measuring point in the flow path of the process medium through the vapour condenser, at least one flow bypass is provided in order to enable an adjustable partial flow of the coolant conveyed by this at least one fan (22) to flow past a heat exchanger module (18) on the outside.

11. Cooking appliance according to the preceding claim, **characterized in that** the cooling lines (26) passing through at least one of the heat exchanger modules (18) are disposed inclined with respect to the horizontal (H) such that the inclined surface serves as a draining surface for condensate making use of gravity.

12. Cooking appliance according to one of the preceding claims, **characterized in that** at least one of the heat exchanger modules (18) is fixed at the front and/or at the back in a form-fit manner and/or in a force-fit manner in the condenser housing (12).

13. Cooking appliance according to one of the preceding claims, **characterized in that** at least one of the heat exchanger modules (18) has a front frame (46) and a rear frame (48) at the front and at the back, respectively, wherein the front frame (46) and the rear frame (48) are firmly connected with a housing body (50) disposed between them.

## Revendications

1. Appareil de cuisson comprenant un condenseur de buée et un carter de condenseur (12), au moins un module échangeur de chaleur (18) agencé dans le carter de condenseur (12) ainsi qu'au moins un orifice d'alimentation grâce auquel de la buée peut être introduite en tant que fluide de procédé dans le module échangeur de chaleur (18), dans lequel un orifice d'évacuation de condensat menant hors du module échangeur de chaleur (18) est également prévu afin d'évacuer la buée condensée,
dans lequel au moins un module échangeur de chaleur (18) est fixé de manière amovible dans le carter de condenseur (12) et est agencé de manière à pouvoir être retiré du carter de condenseur (12) dans l'état de montage final du condenseur de buée (10),
**caractérisé en ce que**
le au moins un module échangeur de chaleur (18) est agencé dans un orifice d'insertion formé dans le carter de condenseur et au sein duquel le module échangeur de chaleur (18) peut être inséré à la manière d'un tiroir par simple mouvement de translation dans une seule direction et peut être retiré par un mouvement dans la direction opposée, et
dans lequel des conduites de refroidissement (26) traversant le module échangeur de chaleur (18) sont prévues lesquelles permettent une traversée du premier module échangeur de chaleur (18) par un fluide de refroidissement.

2. Appareil de cuisson selon la revendication précédente, **caractérisé en ce que** le condenseur de buée est conçu de telle manière qu'au moins un des modules échangeurs de chaleur (18) peut être retiré du carter de condenseur (12) sans outil.

3. Appareil de cuisson selon l'une quelconque des revendications précédentes, **caractérisé en ce qu'**au moins un moyen de fixation pouvant être actionné sans outil est prévu au niveau d'au moins un des modules échangeurs de chaleur (18).

4. Appareil de cuisson selon la revendication précédente, **caractérisé en ce qu'**au moins un élément d'encliquetage, au moins un élément de verrouillage et/ou au moins une section de serrage est/sont prévu(s) au niveau d'au moins un des modules échangeurs de chaleur (18) pour faire office de moyen de fixation.

5. Appareil de cuisson selon l'une quelconque des revendications précédentes, **caractérisé en ce que** les modules échangeurs de chaleur (18) sont agencés à la manière d'un tiroir l'un à côté de l'autre dans le carter de condenseur (12).

6. Appareil de cuisson selon l'une quelconque des revendications précédentes, **caractérisé en ce qu'**une poignée est prévue au niveau d'au moins un des modules échangeurs de chaleur (18).

7. Appareil de cuisson selon l'une quelconque des revendications précédentes, **caractérisé en ce que** plusieurs modules échangeurs de chaleur (18) de construction identique sont agencés dans le carter de condenseur (12) et sont reliés les uns aux autres de manière fonctionnelle.

8. Appareil de cuisson selon la revendication précédente, **caractérisé en ce qu'**au moins un ventilateur (22) est associé à chaque module échangeur de chaleur (18) et/ou les modules échangeurs de chaleur (18) sont reliés entre eux de telle manière qu'ils sont traversés de manière séquentielle à partir de l'orifice d'alimentation.

9. Appareil de cuisson selon l'une quelconque des deux revendications précédentes, **caractérisé en ce que** des conduites de liaison (40) sont prévues afin de relier de manière directe deux modules d'échangeur de chaleur (18).

10. Appareil de cuisson selon l'une quelconque des deux revendications précédentes, **caractérisé en ce qu'**au moins une dérivation d'écoulement est prévue pour commander une différence de pression générée par au moins un des ventilateurs (22) entre la pression ambiante et la pression en un point de mesure au sein du trajet d'écoulement du fluide de procédé à travers le condenseur de buée, afin de pouvoir faire passer à l'extérieur d'un module échangeur de chaleur (18) un sous-flux ajustable du fluide de refroidissement transporté grâce audit au moins un ventilateur (22).

11. Appareil de cuisson selon la revendication précédente, **caractérisé en ce que** les conduites de refroidissement (26) traversant au moins un des modules échangeurs de chaleur (18) sont agencées de manière inclinée par rapport à l'horizontale (H) de telle manière que la surface inclinée sert de surface d'écoulement gravitaire pour le condensat.

12. Appareil de cuisson selon l'une quelconque des revendications précédentes, **caractérisé en ce qu'**au moins un des modules échangeurs de chaleur (18) est fixé par complémentarité de forme et/ou par complémentarité de force à l'avant et/ou à l'arrière du carter de condenseur (12).

13. Appareil de cuisson selon l'une quelconque des revendications précédentes, **caractérisé en ce qu'**au moins un des modules échangeurs de chaleur (18) présente à l'avant et à l'arrière un cadre avant (46) et un cadre arrière (48), dans lequel le cadre avant (46) et le cadre arrière (48) sont reliés de manière fixe à un corps de carter (50) agencé entre eux.
